# EUROPÄISCHE PATENTSCHRIFT

(11) **EP 2 452 327 B1**
(45) Veröffentlichungstag und Bekanntmachung des Hinweises auf die Patenterteilung: **23.03.2016**
(21) Anmeldenummer: 10724267.9
(22) Anmeldetag: 07.05.2010
(51) Int. Cl.: G08G 5/00, G08G 5/04, G01S 13/93

(54) **VERFAHREN UND VORRICHTUNG ZUR VERARBEITUNG VON KOLLISIONSINFORMATIONEN**
METHOD AND APPARATUS FOR PROCESSING OF COLLISION INFORMATION
PROCÉDÉ ET DISPOSITIF DE TRAITEMENT D'INFORMATIONS EN COLLISION

(30) Priorität: 08.07.2009 DE 102009032368
(43) Veröffentlichungstag der Anmeldung: 16.05.2012
(73) Patentinhaber: Cassidian Airborne Solutions GmbH, 28309 Bremen (DE)
(72) Erfinder: VYSHNEVSKYY, Matthias, 28870 Ottersberg (DE)
(74) Vertreter: Greif, Thomas
(86) Internationale Anmeldenummer: PCT/EP2010/002815
(87) Internationale Veröffentlichungsnummer: WO 2011/003488

(56) Entgegenhaltungen:
- WO-A1-2008/134815
- US-A- 3 045 231
- US-A- 3 112 480
- US-A- 3 134 100

## Beschreibung

Die vorliegende Erfindung betrifft ein Verfahren und eine Vorrichtung zur Verarbeitung von Kollisionsinformationen in einem Flugobjekt.

Im Rahmen der Luftverkehrssicherheit ist es von besonderer Bedeutung, Kollisionen zwischen Objekten zu vermeiden. Dies betrifft sowohl bemannte als auch unbemannte Flugobjekte.

Die gegenwärtig übliche Methode zur Vermeidung von Kollisionen im Luftverkehr beruht darauf, dass ein Luftfahrzeugführer andere Luftverkehrsteilnehmer oder sonstige Hindernisse sieht und ihnen entsprechend der Luftverkehrsregeln ausweicht. Zur Verbesserung der eigenen Sichtbarkeit müssen bis auf wenige Ausnahmen alle Luftfahrzeuge Anti-Kollisions-Lichter aufweisen. Weiterhin gibt es Luftfahrzeuge, die mit einem Radarsystem ausgestattet sind, um fremde Objekte auf einem Bildschirm darzustellen. Diese auf Erkennung basierende Methode ist nicht kooperativ, es findet also keine auf die Kollisionsvermeidung abzielende Kommunikation zwischen den Luftfahrzeugen statt.

In sogenannten überwachten Lufträumen wird durch die Luftverkehrskontrolle (ATC) eine Kollisionsvermeidung durch einen Controller am Boden vorgenommen, beispielsweise durch Höhen- oder Flugwegvorgaben an die Luftverkehrsteilnehmer oder durch Hinweise auf andere Luftfahrzeuge, gesperrte Lufträume, stationäre Hindernisse oder Mindestflughöhen.

Darüber hinaus gibt es kooperative Systeme zur Kollisionsvermeidung. Bei kleineren Luftfahrzeugen, zum Beispiel Segelflugzeugen, hat sich ein proprietäres Kollisionsvermeidungssystem mit der Bezeichnung FLARM etabliert. Bei größeren Luftfahrzeugen gibt es ein teilautomatisiertes System mit der Bezeichnung TCAS, bei dem die TCAS-Geräte zweier Luftfahrzeuge ihre Trajektorien derart abgleichen, dass den Flugzeugführern kollisionsvermeidende Flugbahnen vorgeschlagen werden können.

Die auf Sicht basierende Kollisionsvermeidung ist nur bei Sichtflugbedingungen möglich und hängt somit von den Witterungsverhältnissen ab. Radarsysteme können andere Luftfahrzeuge unabhängig von den Sichtbedingungen erkennen, benötigen jedoch einen hohen technischen Aufwand, wie beispielsweise Mehrantennensysteme oder schwenkbare Antennen, um die benötigte Auflösung und Richtungserkennung zu ermöglichen. Die kooperativen Systeme benötigen ein kompatibles Gegenstück im anderen Luftfahrzeug.

Das Dokument DE 102007032084 A1 offenbart ein Verfahren zur Bahnvorhersage mithilfe von Sensorfusion, die hochauflösende Radare oder optische Sensoren in Kombination mit niedrig auflösenden Abstandssensoren verwendet. Neben der Komplexität und dem Gewicht der verwendeten Geräte ergibt sich die Notwendigkeit, die Flugbahn anderer Luftfahrzeuge mittels rechnergestützter Methoden zu extrapolieren. Aufgrund des Risikos, die Flugbahn nicht richtig oder nicht eindeutig zu berechnen, ergibt sich eine hochkomplexe Software, die entsprechend aufwändig zu validieren und zu warten ist und darüber hinaus zur Ausführung einen leistungsfähigen Rechner mit hoher Leistungsaufnahme erfordert.

US 3 045 231 offenbart ein Verfahren zur Verarbeitung von Kollisionsinformatin.

Es ist daher die Aufgabe der vorliegenden Erfindung, ein Verfahren und eine Vorrichtung zur Verarbeitung von Kollisionsinformationen bereitzustellen, die auf einfachen und energiesparenden Komponenten basieren und eine nicht-kooperative Vermeidung von Kollisionen ermöglichen.

Diese Aufgabe wird gelöst durch das Verfahren nach Anspruch 1 und die Vorrichtung nach Anspruch 13. Vorteilhafte Ausgestaltungsformen sind den abhängigen Ansprüchen zu entnehmen.

Das erfindungsgemäße Verfahren zur Verarbeitung von Kollisionsinformationen in einem Flugobjekt weist die Verfahrensschritte Erfassen von sektorisierten Radardaten zumindest in einem vorderen rechten Quadranten und Abarbeiten einer ersten Regel auf. Als Flugobjekt wird das Luftfahrzeug bezeichnet, in dem die Kollisionsinformationen verarbeitet werden. Aus den Radardaten lassen sich für ein in einem Sektor befindliches Objekt zumindest der Abstand und die Annäherungsgeschwindigkeit ermitteln. Als Objekt wird jedes stationäre oder bewegliche Objekt bezeichnet, mit dem das Flugobjekt potentiell kollidieren kann. Die Annäherungsgeschwindigkeit ist diejenige Geschwindigkeit, mit der sich der Abstand zwischen dem Flugobjekt und dem Objekt verringert.

Die sektorisierten Radardaten werden bevorzugt von Sektorradaren bereitgestellt, die einen von der Konfiguration des Radars abhängigen Raumsektor relativ zum Radar überwachen. Ein Sektorradar ist beispielsweise ausschließlich in der Lage, festzustellen, ob sich ein Objekt im überwachten Sektor befindet, welchen Abstand es hat und mit welcher Geschwindigkeit es sich nähert. Es kann üblicherweise nicht auflösen, wo sich das Objekt innerhalb des Sektors befindet. Derartige Sektorradare sind einfach aufgebaut, leicht, als zuverlässig erprobt, als Standardkomponente erhältlich und benötigen wenig Energie.

Gemäß der ersten Regel wird eine Hinweisinformation ausgegeben, wenn sich ein Objekt innerhalb eines ersten Entscheidungshorizonts befindet, sich das Objekt dem Flugobjekt nähert und sich das Objekt im vorderen rechten Quadranten befindet. Bei der Hinweisinformation handelt es sich beispielsweise um einen gelben Alarm oder eine Warnung. Die Hinweisinformation wird beispielsweise an den Flugzeugführer des Flugobjekts ausgegeben. Das Ausgeben einer Hinweisinformation kann auch das Aussenden umfassen, beispielsweise an eine Bodenstation oder einen Flugzeugführer, der sich nicht an Bord des Flugobjekts befindet.

Ein Entscheidungshorizont ist ein Abstand vom Flugobjekt. Objekte, die sich innerhalb des Entscheidungshorizonts befinden, verursachen die Bereitstellung von Kollisionsinformationen, also insbesondere Informationen über den Abstand vom Flugobjekt und die Annäherungsgeschwindigkeit, die daraufhin verarbeitet werden. Der Entscheidungshorizont berechnet sich beispielsweise als Produkt einer Entscheidungszeitspanne und der Annäherungsgeschwindigkeit des Objekts an das Flugobjekt. Die Entscheidungszeitspanne ist die mindeste Zeitdauer, in der das Objekt vor der möglichen Kollision detektiert oder berücksichtigt werden soll. Die Entscheidungszeitspanne beträgt bevorzugt zwischen 30 und 90 Sekunden, insbesondere 60 Sekunden. Gemäß einer ersten Ausgestaltungsform wird der erste Entscheidungshorizont zumindest aus dem Produkt aus einer ersten Entscheidungszeitspanne und der Annäherungsgeschwindigkeit berechnet.

Alternativ oder zusätzlich wird für einen Entscheidungshorizont eine konkrete Entfernung festgelegt, beispielsweise eine nautische Meile (1852 Meter) oder 750 Fuß (229 Meter). Wird der Entscheidungshorizont aus dem Produkt und der absoluten Entfernung berechnet, so wird als Entscheidungshorizont beispielsweise der kleinere der beiden Abstände gewählt. Dies gilt nicht nur für den ersten, sondern für alle Entscheidungshorizonte.

Der vordere rechte Quadrant ist derjenige Quadrant des Raumes, der bezogen auf die Längsachse des Flugobjektes, und damit üblicherweise auch bezogen auf die Flugrichtung des Flugobjektes, in Vorwärtsrichtung auf der rechten Seite liegt. Die Sektorradare decken bevorzugt den gesamten vorderen rechten Quadranten ab, jedoch zumindest einen Bereich des rechten vorderen Quadranten, der an die Längsachse des Flugobjektes angrenzt. Optional sind auch Sektorradare vorgesehen, deren Erfassungsbereiche Sektoren im vorderen linken Quadranten abdecken.

Bevorzugt erfolgt weiterhin die Berechnung einer Kollisionszeit als Quotient des Abstands des Objekts geteilt durch die Annäherungsgeschwindigkeit, wenn die Bedingungen der ersten Regel erfüllt sind. Die Kollisionszeit ist die Zeitdauer, nach der das Flugobjekt mit dem Objekt kollidieren wird, wenn die Annäherungsgeschwindigkeit konstant bleibt. Innerhalb der Kollisionszeit müssen die Maßnahmen entschieden und getroffen werden, die eine Kollision vermeiden.

In vorteilhafter Weise wird eine Wegpunktweiterschaltung deaktiviert, wenn die Bedingungen der ersten Regel erfüllt sind und die Flugbahn des Flugobjekts anhand einer Sollstandlinienregelung bestimmt wird. Bei einer Sollstandlinienregelung wird eine Flugbahn durch Wegpunkte auf der Flugbahn und die Anflugwinkel auf die jeweiligen Wegpunkte, die sogenannten Sollstandlinien, definiert. Die Deaktivierung der Wegpunktweiterschaltung bedeutet, dass das Flugobjekt seinen gegenwärtigen Kurs beibehält. Dies ist insbesondere dann vorteilhaft, wenn das Flugobjekt von einem anderen Objekt überholt wird, da das andere Objekt dann die Flugbahn des Flugobjekts korrekt extrapolieren kann.

Gemäß der Erfndung wird eine zweite Regel abgearbeitet, nach der sich ein zweiter Entscheidungshorizont zumindest aus der Annäherungsgeschwindigkeit und einer zweiten Entscheidungszeitspanne berechnet und bei Sollstandlinienregelung des Flugobjekts ein Ausweichwegpunkt gesetzt wird, wenn sich das Objekt innerhalb des zweiten Entscheidungshorizonts befindet, sich das Objekt nähert und sich das Objekt in einem linken Teilbereich des rechten vorderen Quadranten befindet.

Der zweite Entscheidungshorizont berechnet sich, wie vorstehend bereits allgemein beschrieben, als Produkt aus der Annäherungsgeschwindigkeit und einer zweiten Entscheidungszeitspanne. Die zweite Entscheidungszeitspanne entspricht beispielsweise der ersten Entscheidungszeitspanne. Der linke Teilbereich des rechten vorderen Quadranten ist ein Teil des rechten vorderen Quadranten, der an der Längsachse des Flugobjekts beginnt und sich in den rechten vorderen Quadranten erstreckt. Bevorzugt ist die Grenzebene zwischen dem linken vorderen Quadranten und dem rechten vorderen Quadranten im linken Teilbereich des rechten vorderen Quadranten enthalten. Somit werden Objekte, die sich dem Flugobjekt frontal nähern, dem linken Teilbereich zugerechnet.

Der linke Teilbereich weist bevorzugt eine Breite zwischen 40 Grad und 50 Grad, insbesondere 45 Grad, auf. In vorteilhafter Weise entspricht der rechte Rand des linken Teilbereichs der rechten Sektorgrenze eines der Sektorradare oder liegt unwesentlich links von dieser Sektorgrenze, beispielsweise weniger als 3 Grad davon entfernt. Ein Objekt, das von einem Sektorradar erfasst wird, dessen Sektor innerhalb des linken Teilbereichs liegt, nähert sich dem Flugobjekt daher in einem kleinen Winkel.

Optional wird die Wegpunktweiterschaltung aus der ersten Regel nur dann deaktiviert, wenn sich das detektierte Objekt im rechten vorderen Quadranten, jedoch außerhalb des linken Teilbereichs befindet.

In einer Ausgestaltungsform der zweiten Regel wird eine Kollisionszeit als Quotient des Abstands eines Objekts geteilt durch seine Annäherungsgeschwindigkeit berechnet und der Ausweichwegpunkt in einem Abstand, der bevorzugt dem Produkt der Geschwindigkeit des Flugobjekts mit der Kollisionszeit entspricht, und in einem Winkel, der sich aus der halben Breite des linken Teilbereichs multipliziert mit der Entscheidungszeitspanne geteilt durch die Kollisionszeit berechnet, rechts von der Flugrichtung des Flugobjekts gesetzt. Das Flugobjekt ändert seinen Kurs also nach rechts, um dem vorne rechts detektierten Objekt auszuweichen. Der Quotient aus Entscheidungszeitspanne und Kollisionszeit beeinflusst den Winkel des Ausweichwegpunktes dahingehend, dass bei einer kurz bevorstehenden Kollision ein großer Winkel gewählt wird, während bei einer größeren Restzeit bis zur Kollision ein kleinerer Winkel zur Kollisionsvermeidung ausreicht. Optional ist der Winkel des Ausweichwegpunktes auf 90 Grad beschränkt. Weiterhin optional ist der Abstand des Ausweichwegpunktes begrenzt, beispielsweise auf 750 Meter.

In einer weiteren Ausgestaltungsform der zweiten Regel wird die Geschwindigkeit des Flugobjekts reduziert, wenn die Bedingungen der zweiten Regel erfüllt sind und die Geschwindigkeit des Flugobjekts nach der Reduzierung größer ist als eine Mindestgeschwindigkeit. Dadurch wird die Zeit bis zur Kollision vergrößert und ein Ausweichen vereinfacht.

In einer weiteren Fortführung des Verfahrens wird eine dritte Regel abgearbeitet, nach der ein Sinkflug oder Steigflug des Flugobjekts eingeleitet wird, wenn sich ein Objekt nähert und sich das Objekt innerhalb eines dritten Entscheidungshorizonts befindet. Wenn die Flughöhe des Flugobjekts größer ist als ein Schwellenwert, dann wird ein Sinkflug eingeleitet, beispielsweise mit maximaler Sinkrate und/oder um 150 Fuß. Ansonsten wird ein Steigflug eingeleitet, beispielsweise mit maximaler Steigrate und/oder um 150 Fuß. Der Schwellenwert ist so gewählt, dass das Flugobjekt nach dem Sinkflug die Mindestflughöhe nicht unterschreitet. Für die dritte Regel ist es nicht notwendig, dass sich das Objekt im rechten vorderen Quadranten befindet. Bei zu geringem Abstand des Objekts vom Flugobjekt wird die Höhenänderung zur Kollisionsvermeidung unabhängig von der Position des Objekts durchgeführt.

Der dritte Entscheidungshorizont berechnet sich beispielsweise zumindest aus der Annäherungsgeschwindigkeit und einer dritten Entscheidungszeitspanne, zum Beispiel als Produkt dieser Werte wie vorstehend bereits beschrieben. Die dritte Entscheidungszeitspanne ist bevorzugt kleiner als die erste und die zweite Entscheidungszeitspanne, beispielsweise um die Hälfte, zwei Drittel oder drei Viertel, und beträgt bevorzugt 15 Sekunden. Dies führt dazu, dass die Höhenanpassung besonders bei unmittelbarer Kollisionsgefahr durchgeführt wird.

In einer Weiterbildung der dritten Regel wird eine Kollisionszeit als Quotient des Abstands geteilt durch die Annäherungsgeschwindigkeit berechnet und bei Sollstandlinienregelung des Flugobjekts ein Ausweichwegpunkt gesetzt, wenn sich das Objekt im rechten vorderen Quadranten befindet und die Bedingungen der dritten Regel erfüllt sind. Dabei wird der Ausweichwegpunkt in einem Abstand, der bevorzugt dem Produkt der Geschwindigkeit des Flugobjekts mit der Kollisionszeit entspricht, und in einem Winkel, der sich aus der Breite des linken Teilbereichs multipliziert mit der Entscheidungszeitspanne geteilt durch die Kollisionszeit berechnet, links von der Flugrichtung des Flugobjekts gesetzt. Optional ist der Abstand des Ausweichwegpunktes begrenzt, beispielsweise auf 1000 Meter.

Mit dieser Weiterbildung ändert das Flugobjekt nicht nur seine Flughöhe, sondern auch seine Flugrichtung. Der Ausweichwegpunkt wird im Wesentlichen wie bei der zweiten Regel berechnet, doch ist der Winkel um den Faktor 2 größer. Außerdem wird der Ausweichwegpunkt links von der Flugrichtung gesetzt anstatt rechts.

Der Abstand und die Annäherungsgeschwindigkeit eines Objekts werden bevorzugt periodisch bestimmt beziehungsweise abgetastet, beispielsweise 0,5 bis drei mal pro Sekunde, bevorzugt ein mal pro Sekunde. Dadurch lässt sich eine zeitliche Änderung der Situation nachvollziehen, gleichzeitig benötigen die Sektorradare nur wenig Energie und eine Mehrfachnutzung der Radarfrequenzen ist möglich. In jedem Durchgang sendet ein Sektorradar beispielsweise einen Puls von einer Millisekunde Länge aus. Nach jeder Abtastung werden die Voraussetzungen der Regeln überprüft.

Führt eine der Regeln dazu, dass ein neuer Ausweichwegpunkt gesetzt wird, so wird bevorzugt ein bestehender Ausweichwegpunkt gelöscht. Bei der Anwendung der zweiten Regel wird der Ausweichwegpunkt demnach so lange aktualisiert, bis das Objekt den linken Teilbereich des vorderen rechten Quadranten verlassen hat. Ein Ausweichwegpunkt wird außerdem gelöscht, wenn die Kollision erfolgreich vermieden wurde, sodass auf die ursprüngliche Flugbahn zurückgekehrt werden kann.

Bevorzugt wird ein einer Regel zugeordneter Risikoobjektzähler inkrementiert, wenn ein Objekt die Bedingungen dieser Regel neu erfüllt. Ein Objekt erfüllt die Bedingungen einer Regel neu, wenn die Bedingungen zum ersten Mal erfüllt werden oder die Bedingungen erfüllt werden, die Bedingungen aber bei der vorhergehenden Überprüfung nicht erfüllt wurden. Somit gibt der Risikoobjektzähler an, wie viele Objekte aktuell die Bedingungen der zugehörigen Regel erfüllen. So ist der ersten Regel ein erster Risikoobjektzähler zugeordnet, der zweiten Regel ein zweiter Risikoobjektzähler zugeordnet und der dritten Regel ein dritter Risikoobjektzähler zugeordnet,

Bevorzugt besteht eine Priorität zwischen den Regeln. Insbesondere hat eine Regel mit einer höheren Nummer eine höhere Priorität. Die Auswirkungen einer höher priorisierten Regel überschreiben demnach die Auswirkungen einer niedriger priorisierten Regel.

Optional wird eine Maßnahmendauer berechnet, beispielsweise zu 1,1 mal der Kollisionszeit. Die Maßnahmendauer ist diejenige Zeitdauer, für die die von den Regeln verursachten Maßnahmen durchgeführt werden. Dies kann alle Maßnahmen einschließen, inklusive der Deaktivierung der Wegpunktweiterschaltung.

Die Erfindung betrifft weiterhin eine Vorrichtung zur Verarbeitung von Kollisionsinformationen in einem Flugobjekt oder in einer Bodenstation von der aus das Flugobjekt geführt wird, aufweisend mindestens zwei Sektorradare, deren kumulativer Erfassungsbereich zumindest einen vorderen rechten Quadranten abdeckt und die für ein in einem Sektor befindliches Objekt zumindest den Abstand und die Annäherungsgeschwindigkeit ermitteln, und eine Recheneinheit, die dazu ausgebildet ist, das vorstehend beschriebene Verfahren durchzuführen.

Bevorzugt wird der vordere rechte Quadrant von mindestens zwei Sektorradaren abgedeckt, sodass ein linker Teilbereich des rechten vorderen Quadranten von mindestens einem Sektorradar abgedeckt wird und der Rest des rechten vorderen Quadranten von mindestens einem Sektorradar abgedeckt wird. Somit kann unmittelbar detektiert werden, ob sich ein Objekt im linken Teilbereich des rechten vorderen Quadranten befindet.

Optional überlappen sich die von den Sektorradaren abgedeckten Sektoren an deren Rändern. Die Überdeckung beträgt beispielsweise zwischen 2 und 10 Grad, bevorzugt 5 Grad.

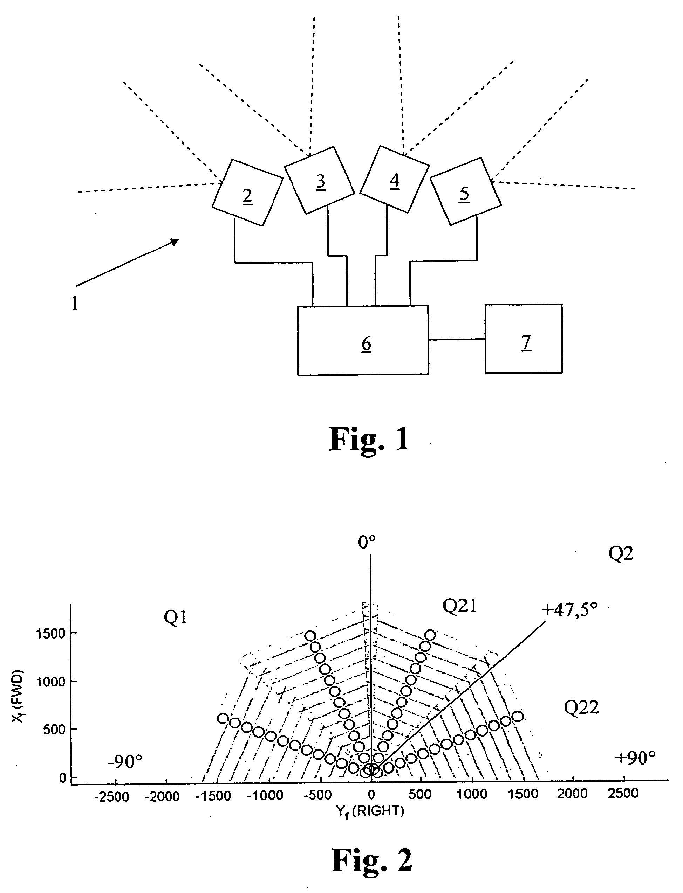

Die vorliegende Erfindung soll anhand eines Ausführungsbeispiels mit fünft Szenarien näher erläutert werden. Dabei zeigt die Figur 1 schematisch eine erfindungsgemäße Vorrichtung und die Figuren 2 bis 20 zeigen verschiedene Luftverkehrssituationen der Szenarien zu unterschiedlichen Zeitpunkten.

Die Figur 1 zeigt schematisch eine Vorrichtung 1 zur Verarbeitung von Kollisionsinformationen in einem Flugobjekt. Die Vorrichtung 1 weist vier Sektorradare 2, 3, 4 und 5 auf, die jeweils einen vertikalen Erfassungsbereich (FOV, Field Of View) von 30 Grad und einen horizontalen Erfassungsbereich von 50 Grad aufweisen. Der horizontale Erfassungsbereich ist durch die gestrichelten Linien angedeutet. In Richtung des horizontalen Erfassungsbereichs sind die Sektorradare um 45 Grad versetzt angeordnet, sodass sich die horizontalen Erfassungsbereiche zweier benachbarter Sektorradare um 5 Grad überschneiden. Dies ist insbesondere in der Figur 2 zu erkennen. Die Figur 2 zeigt den vom Flugobjekt aus gesehen vorderen Halbraum. Dieser ist in einen linken vorderen Quadranten Q1 und einen rechten vorderen Quadranten Q2 unterteilt, wobei die Längsachse des Flugobjekts in der Trennebene zwischen den beiden Quadranten liegt.

Die beiden Sektorradare 4 und 5 decken den vorderen rechten Quadranten Q2 ab. Der Erfassungsbereich des Sektorradars 4 beginnt im Wesentlichen an der Trennebene zwischen den beiden Quadranten Q1 und Q2, erstreckt sich jedoch um 2,5 Grad in den linken vorderen Quadranten Q1 hinein. Analog decken die beiden Sektorradare 2 und 3 den vorderen linken Quadranten Q1 ab. Das Sektorradar 4 deckt einen linken Teilbereich Q21 des vorderen rechten Quadranten Q2 ab, der im Wesentlichen an der Trennebene zwischen den Quadranten Q1 und Q2 beginnt und sich bis 47,5 Grad nach rechts, also dem rechten Rand des Erfassungsbereichs des Sektorradars 4, erstreckt. Der restliche Teil des vorderen rechten Quadranten ist mit Q22 bezeichnet.

Jedes der Sektorradare 2 bis 5 ist dazu ausgebildet, für ein in dem zugehörigen Sektor befindliches Objekt zumindest den Abstand und die Annäherungsgeschwindigkeit vom Sektorradar und damit vom Flugobjekt zu ermitteln. Die Sektorradare sind mit einer Recheneinheit 6 verbunden, die dazu ausgebildet ist, das erfindungsgemäße Verfahren zur Verarbeitung von Kollisionsinformationen durchzuführen. Die Recheneinheit 6 ist mit einer Schnittstelle 7 verbunden, die dazu eingerichtet ist, Informationen an eine Anzeigevorrichtung oder eine weitere Komponente wie beispielsweise einen Bordrechner weiterzuleiten.

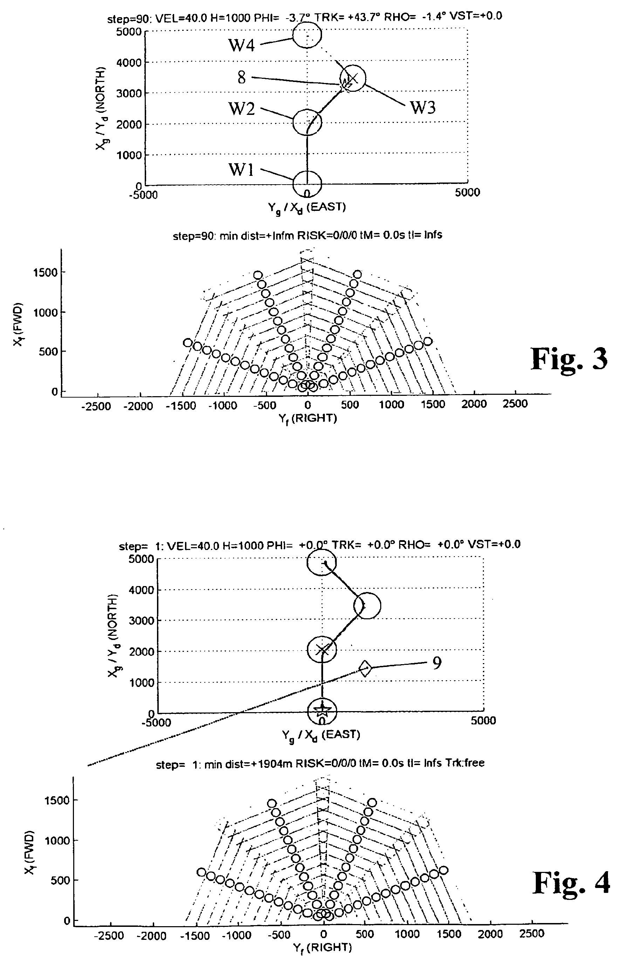

Die Figuren 3 bis 20 zeigen beispielhafte Luftverkehrssituationen gemäß verschiedener Szenarien. Der untere Teil der Figuren zeigt schematisch den Zustand der Sektorradare 2 bis 5. Der obere Teil der Figuren zeigt die geplante oder tatsächliche Flugbahn des Flugobjekts 8 und die Flugbahnen eventueller weiterer Objekte. Vorliegend ist das Flugobjekt 8 unbemannt und beispielsweise eine ferngesteuerte oder programmierte Drohne. Die Zahlenwerte an den Achsen der Koordinatensysteme bezeichnen Abstände in [m].

Die Flugbahn des Flugobjekts 8 wird anhand einer Sollstandlinienregelung vorgegeben. Dabei werden anzufliegende Wegpunkte und die Anflugrichtungen auf die jeweiligen Wegpunkte festgelegt. Im vorliegenden Fall wird die geplante Flugbahn, wie sie in der Figur 3 anGanBEn ist, druch die Wenghpkte W1, W2, W3 und W4 beschrieben.

Der nächste anzufliegende Wegpunkt, der auch als aktueller Zielwegpunkt bezeichnet wird, ist in den Figuren 3 bis 20 durch ein X markiert. Das Flugobjekt 8 wird durch einen Stern repräsentiert. Andere Objekte sind durch eine Raute dargestellt.

In den vorliegenden Beispielen wird von einer Abfrage der Sensoren und einer Informationsverarbeitung im Sekundentakt ausgegangen. Die Sekunde, zu der die Darstellung in einer Figur korrespondiert, wird mit "step" bezeichnet. Sie bezieht sich auf einen beliebig festlegbaren Nullpunkt. Die Wegpunktweiterschaltung erfolgt in einer Regelschleife, die aufrgund der Flugkörperdynamik bevorzugt übertaktet ist, beispielsweise um den Faktor 4. Das bedeutet, das die Routinen der Wegpunktweiterschaltung vier mal pro Sekund abgearbeitet werden.

Im oberen Diagramm werden die geplante Flugbahn und aktuelle Fluggeräteparameter dargestellt. "VEL" bezeichnet die Geschwindigkeit des Flugobjekts 8 in [m/s], H die Höhe in [m]. "PHt" entspricht dem Hängewinkel in [°], "TRK" dem Kurs in [°], "RHO" dem Peilwinkel zum Zielwegpunkt in [°] und "VST" der Steigrate in [m/s]. Änderungen an den Parametern, z.B. infolge von Regelbearbeitungen, werden naturgemäß erst im nächsten Schritt sichtbar.

Im unteren Diagramm werden Parameter des hier beschriebenen Verfahrens dargestellt. "min dist" bezeichnet den Abstand zum nächstgelegenen Objekt in [m], "RISK" repräsentiert drei Risikoobjektzähler. Die Werte der Risikoobjektzähler sind durch Schrägstriche getrennt. "tI" bezeichnet den Kollisionszeitpunkt oder Impaktzeitpunkt. Der Kollisionszeitpunkt berechnet sich für jedes Objekt aus dem Abstand des Objekts geteilt durch die Annäherungsgeschwindigkeit des Objekts (als vrel bezeichnet), die beide von einem Sektorradar ermittelt werden. Optional wird zu dem so berechneten Kollisionszeitpunkt eine konstante Zeitspanne, beispielsweise fünf Sekunden, hinzuaddiert. Die in den Figuren angegebene Kollisionszeit tI ist die kleinste aller berechneten Kollisionszeiten. "tM" bezeichnet die Dauer einer einzuleitenden Maßnahme und berechnet sich beispielsweise zu 1,1 mal tI. In den Figuren steht "Inf" für unendlich. min dist und tl sind unendlich, wenn kein anderes Objekt auf Kollisionskurs detektiert ist.

In den vorliegenden Szenarien beträgt die erste Entscheidungszeitspanne tE1 60 Sekunden, die zweite Entscheidungszeitspanne tE2 beträgt 30 Sekunden. Die dritte Entscheidungszeitspanne tE3 wird zu 10 Sekunden gewählt. Der erste Entscheidungshorizont ist der kleinere von zwei Werten, wobei der eine Wert ein fester Abstand von einer nautischen Meile ist und der andere Wert das Produkt aus vrel und tE1 ist. Der zweite Entscheidungshorizont ist der kleinere von zwei Werten, wobei der eine Wert ein fester Abstand von 750 Fuß plus drei mal dem Kurvenradius des Flugobjekts 8 ist und der andere Wert das Produkt aus vrel und tE2 ist. Der dritte Entscheidungshorizont ist der kleinere von zwei Werten, wobei der eine Wert ein fester Abstand von 750 Fuß ist und der andere Wert das Produkt aus vrel und tE3 ist. Somit wird ein Entscheidungshorizont im Wesentlichen durch eine gewünschte Vorwarnzeit und die Annäherungsgeschwindigkeit bestimmt, nach unten jedoch durch einen Mindestabstand begrenzt.

Die Figur 3 zeigt ein erstes Szenario, bei dem die Flugbahn anhand der vier Wegpunkte W1, W2, W3 und W4 geplant und abgeflogen wird. In diesem ersten Szenario befindet sich kein anderes Objekt auf Kollisionskurs. Zum dargestellten Zeitpunkt von 90 Sekunden nach dem Passieren des Wegpunkts W1 befindet sich das Flugobjekt 8 kurz vor dem Wegpunkt W3 und steht kurz davor, Kurs auf den nächsten Wegpunkt W4 zu nehmen.

Ein zweites Szenario zeigen die Figuren 4 bis 7. Abweichend von dem Szenario aus Figur 3 kreuzt ein Objekt 9 die Flugbahn des Flugobjekts 8 von rechts nach links. Das Objekt 9 ist vorflugberechtigt und kreuzt auf selber Höhe.

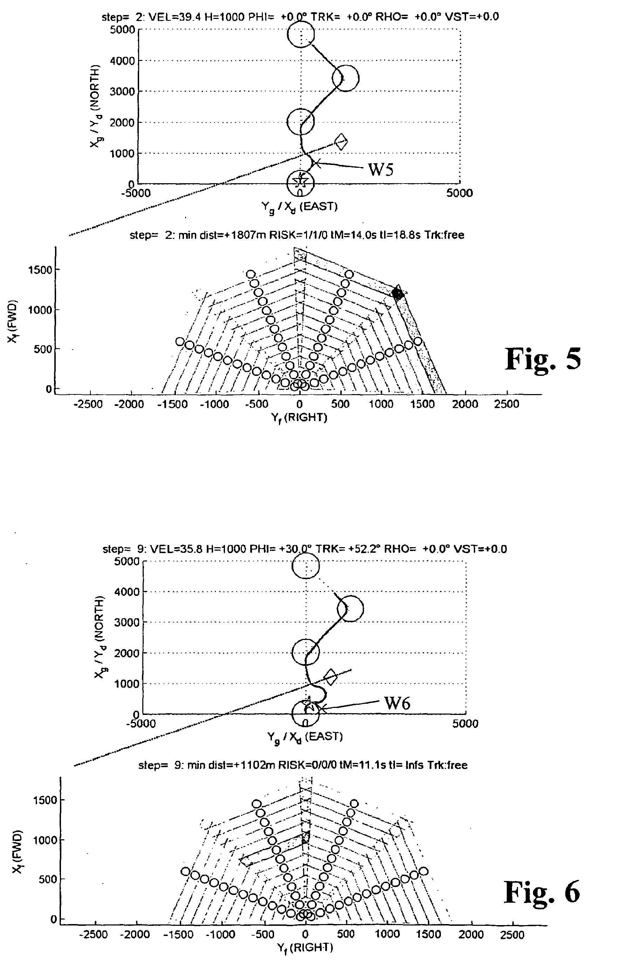

In der Figur 5 ist zu erkennen, dass die beiden Sektorradare 4 und 5 das Objekt 9 detektieren, da es sich im Überlappungsbereich der Erfassungsbereiche befindet. Somit befindet sich das Objekt 9 im linken Teilbereich Q21 des rechten vorderen Quadranten Q2. Das Objekt 9 wird in einem Abstand von 1807 Metern detektiert und die Kollisionszeit tl zu 18,8 Sekunden berechnet. Am Zähler RISK ist zu erkennen, dass das Objekt 9 die Bedingungen der Regeln 1 und 2 erfüllt, also diese Regeln aktiviert. Daraufhin wird gemäß Regel 2 ein Ausweichwegpunkt W5 gesetzt und der Kurs entsprechend geändert. Im vorliegenden Beispiel befindet sich das Objekt 9 auch nach der ersten Kursänderung noch im Erfassungsbereich des Sektorradars 4. Die Regel 2 bleibt also weiterhin aktiviert. Im nächsten Schritt wird der Ausweichwegpunkt W5 gelöscht und durch einen neuen Ausweichwegpunkt ersetzt. Dies setzt sich fort, bis bei step=9s ein Ausweichwegpunkt W6 gesetzt und ein Kurs angelegt wurden, sodass sich das Objekt im Erfassungsbereich des Sektorradars 3, also im linken vorderen Quadranten Q1 befindet und keine Kollisionsgefahr mehr besteht. Dies ist in der Figur 6 gezeigt.

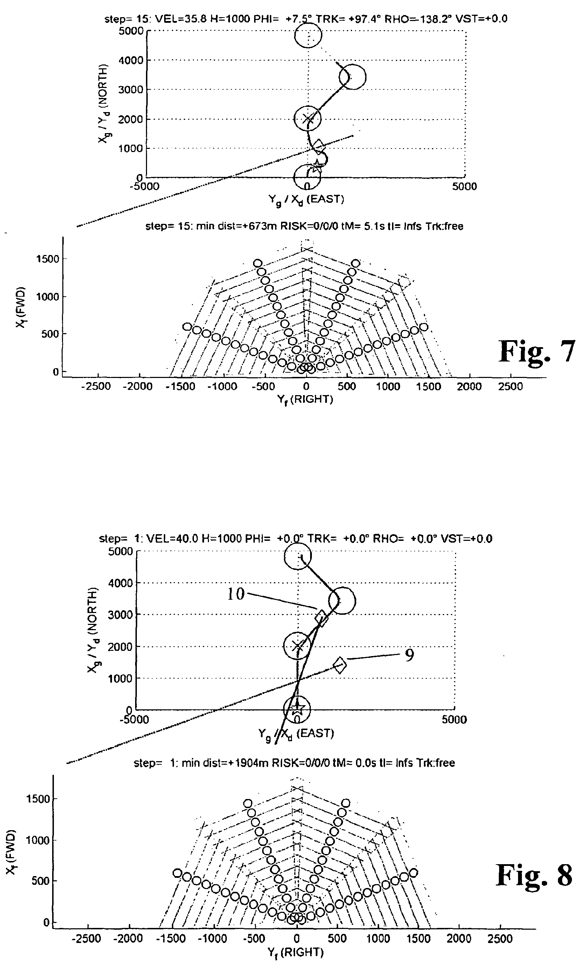

Wie in Figur 7 dargestellt, wird beim Erreichen eines Umschaltabstandes von Zielwegpunkt, im vorliegenden einem Standardkurvenradius von 400 Metern, der Ausweichwegpunkt W6 gelöscht und der Wegpunkt W2 als aktueller Zielwegpunkt gesetzt, um mit der geplanten Flugbahn fortzufahren. Der Zähler RISK wird auf 0/0/0 zurückgesetzt.

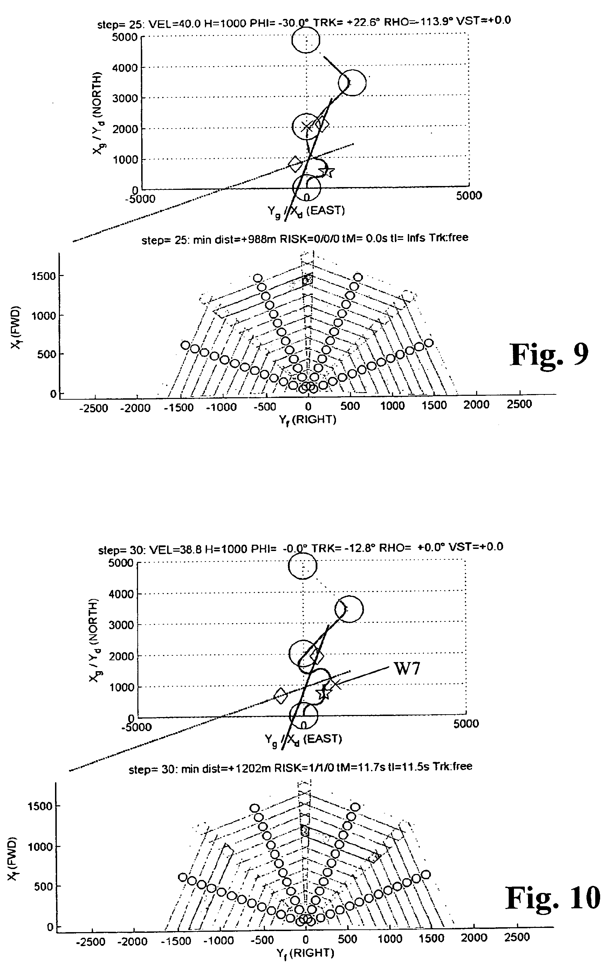

Das dritte Szenario, dessen Ausgangssituation in der Figur 8 dargestellt ist, ähnelt dem zweiten Szenario, doch kreuzt zusätzlich ein langsameres, vorflugberechtigtes Objekt 10 auf derselben Höhe von rechts und befindet sich auf Kollisionskurs mit dem Flugobjekt 8. Der Verlauf mit Aktivierung der Regeln 1 und 2 durch das Objekt 9 ist zunächst genau so wie in den Figuren 4 bis 7 dargestellt. Nach Passieren des Objekts 9 schneidet der geplante Flugweg des Flugobjekts 8 den des Objekts 10. Das Objekt 10 wird, wie Figur 9 dargestellt, bei step = 25 Sekunden im Abstand von 1551 Metern vom Sektorradar 3 im linken vorderen Quadranten Q1 entdeckt. Die als min dist angegebene Entfernung von 988 Metern bezieht sich auf das Objekt 9.

Wie aus der Figur 10 ersichtlich ist, hat sich das Flugobjekt 8 beim Anflug auf den Wegpunkt W2 bei step = 30 Sekunden so weit gedreht, dass das Objekt 10 vom Sektorradar 3 im rechten vorderen Quadranten Q2 lokalisiert wird. Zu diesem Zeitpunkt beträgt der Abstand des Objekts 10 genau 1202 Meter vom Flugobjekt 8. Damit erfüllt das Objekt 10 die Voraussetzungen der Regeln 1 und 2. Folglich wird ein Ausweichwegpunkt W7 eingefügt und angeflogen und RISK auf 1/1/0 erhöht.

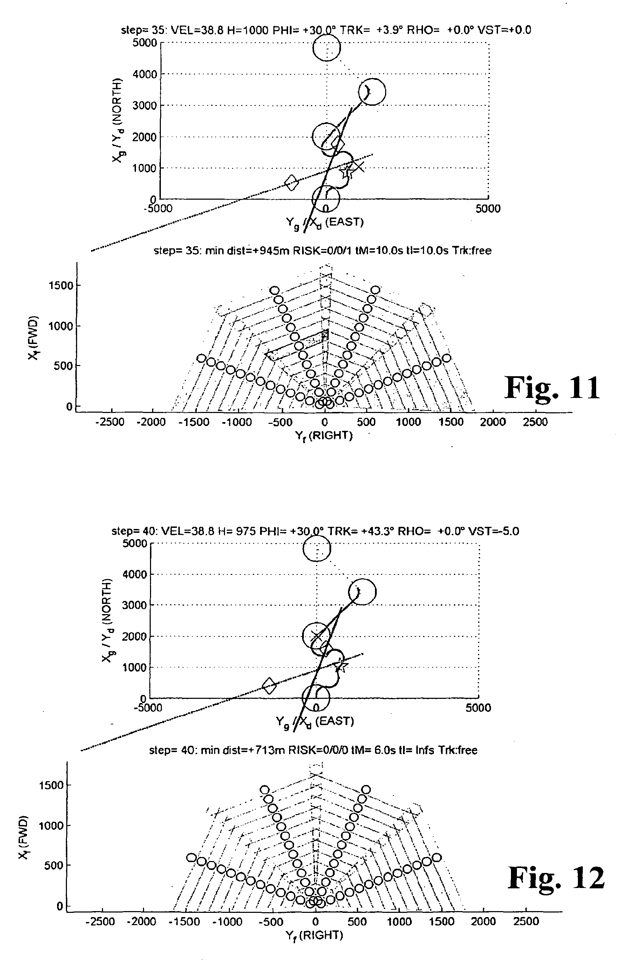

Zum Zeitpunkt step = 35 Sekunden in Figur 11 hat sich das Objekt 10 bis auf 945m genähert. Da die Kollisionszeit tl jedoch zu 10,0 Sekunden berechnet wurde und sich das Objekt 10 dem Flugobjekt 8 nähert, sind die Bedingungen der dritten Regel erfüllt und RISK wird auf 0/0/1 erhöht sowie ein Sinkflug mit einer Sinkrate von 5 m/s eingeleitet. Wie im zweiten Szenario wird der Ausweichwegpunkt, hier W7, bei Erreichen des Umschaltabstandes gelöscht und die ursprüngliche Flugplanung wieder aufgenommen sowie RISK auf 0/0/0 verringert. Dies ist in der Figur 12 dargestellt.

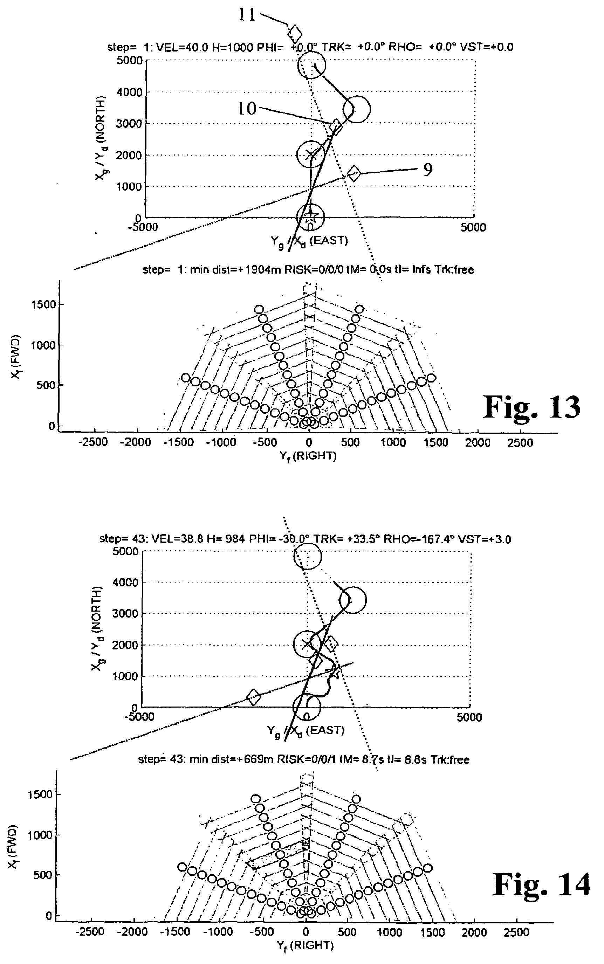

Das vierte Szenario, dessen Ausgangssituation in der Figur 13 dargestellt ist, ähnelt dem dritten Szenario, doch kreuzt weiter zusätzlich ein schnelles Objekt 11 im Steigflug von links nach rechts in einem spitzen Winkel. Der Verlauf mit Aktivierung der Regeln 1 und 2 durch das Objekt 9 und anschließend durch das Objekt 10 ist zunächst genau so wie in den Figuren 4 bis 11 dargestellt.

In der Situation, wie sie zum Zeitpunkt step = 43 Sekunden in der Figur 14 dargestellt ist, wird das Objekt 11 vom Sektorradar 3 detektiert, während der Wegpunkt W2 angeflogen wird. Da das Objekt 11 im linken vorderen Quadranten Q1 detektiert wird, sind die Bedingungen der Regeln 1 und 2 nicht erfüllt. Da die Kollisionszeit tI jedoch zu 8,8 Sekunden berechnet wurde und sich das Objekt 11 dem Flugobjekt 8 nähert, sind die Bedingungen der dritten Regel erfüllt und RISK wird auf 0/0/1 erhöht sowie ein Sinkflug mit einer Sinkrate von 5 m/s eingeleitet.

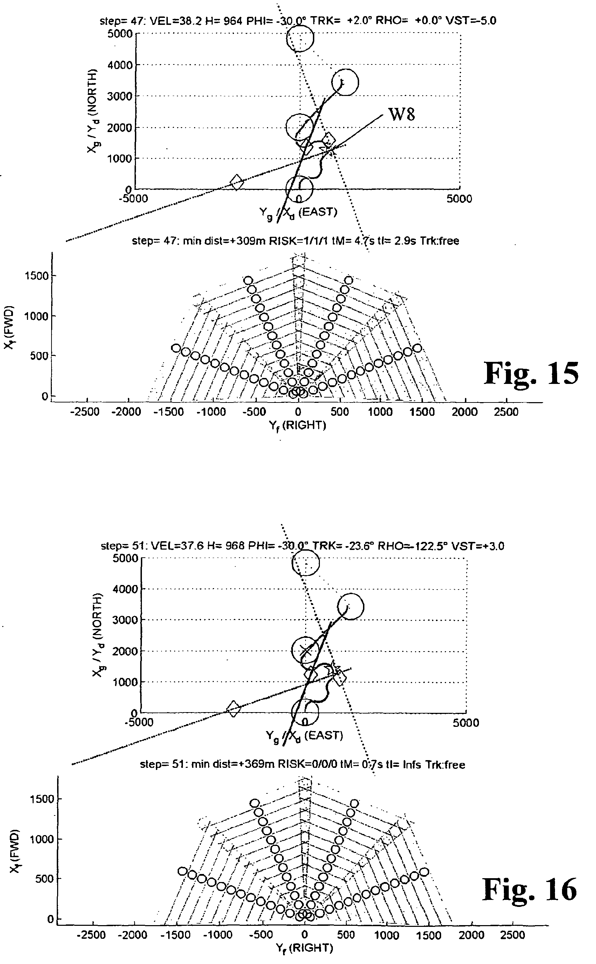

In der Situation vier Sekunden später, wie in der Figur 15 dargestellt, befindet sich das Objekt 11 in einem Abstand von 309 Metern und einer Kollisionszeit von tI = 4,7 Sekunden im vorderen rechten Quadranten Q2, sodass die Bedingungen aller drei Regeln erfüllt sind. Daher wird nach der zweiten Regel ein Ausweichwegpunkt W8 gesetzt, um ein Ausweichmanöver nach rechts einzuleiten.

Die Situation zum Zeitpunkt step = 51 Sekunden ist in der Figur 16 dargestellt. Das Objekt 11 wird nicht mehr von den Sektorradaren 4 oder 5 detektiert. Daher sind die Voraussetzungen der zweiten Regel nicht mehr erfüllt und die ursprüngliche Flugplanung wird wieder aufgenommen. RISK wird auf 0/0/0 zurückgesetzt.

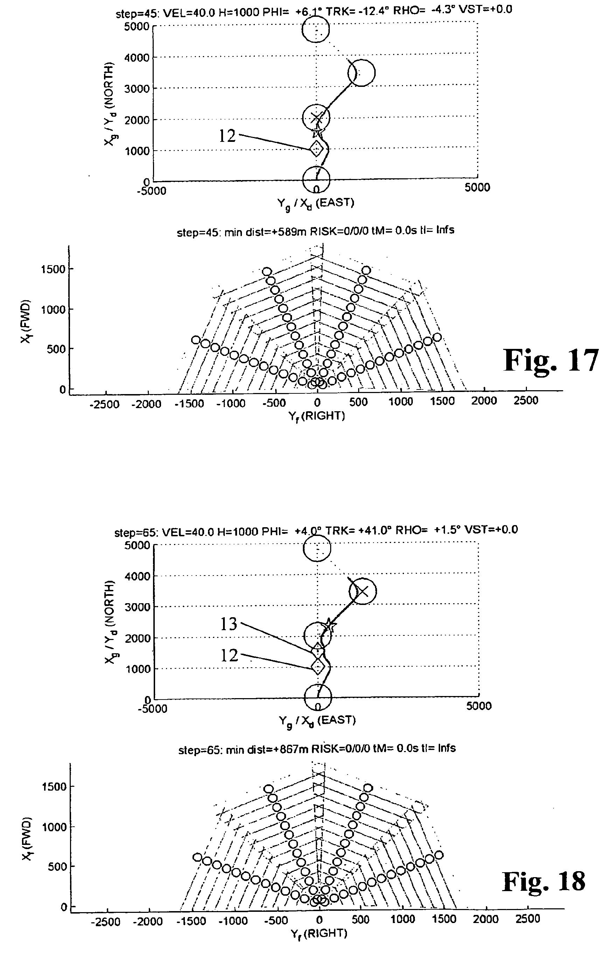

In der Figur 17 ist eine Flugbahn des Flugobjekts 8 gemäß einem vierten Szenario dargestellt, die um ein stationäres Objekt 13 herumgeführt hat. Die zweite Regel hat dazu geführt, dass ein Ausweichwegpunkt nach rechts gesetzt wurde. Dieser Ausweichwegpunkt wurde angeflogen, bis die Annährungsgeschwindigkeit des Objekts 12 kleiner als Null wurde, sich das Flugobjekt 8 also vom Objekt 12 entfernt hat. Nun wird der Wegpunkt W2 als nächster Zielwegpunkt angeflogen.

Im fünften Szenario, das in der Figur 18 dargestellt ist, befindet sich neben dem stationären Objekt 12 ein weiteres stationäres Objekt 13 in der geplanten Flugbahn des Flugobjekts 8. Das stationäre Objekt 12 hat wie im vierten Szenario das Einfügen eines Ausweichwegpunktes nach Regel 2 ausgelöst. Nach dem Löschen des Ausweichwegpunktes hat sich das Flugobjekt 8 beim Anflug auf den Wegpunkt W2 nach links gedreht, bis das Objekt 13 im rechten vorderen Quadranten Q2 detektiert wurde und ebenfalls die Bedingungen der zweiten Regel erfüllt hat. Es wurde ein weiterer Ausweichwegpunkt gesetzt und angeflogen, bevor der weitere Ausweichwegpunkt gelöscht sowie der Wegpunkt W2 angeflogen und passiert wurde. Zum Zeitpunkt step = 65 Sekunden befindet sich das Flugobjekt 8 nun im Anflug auf den Wegpunkt W3.

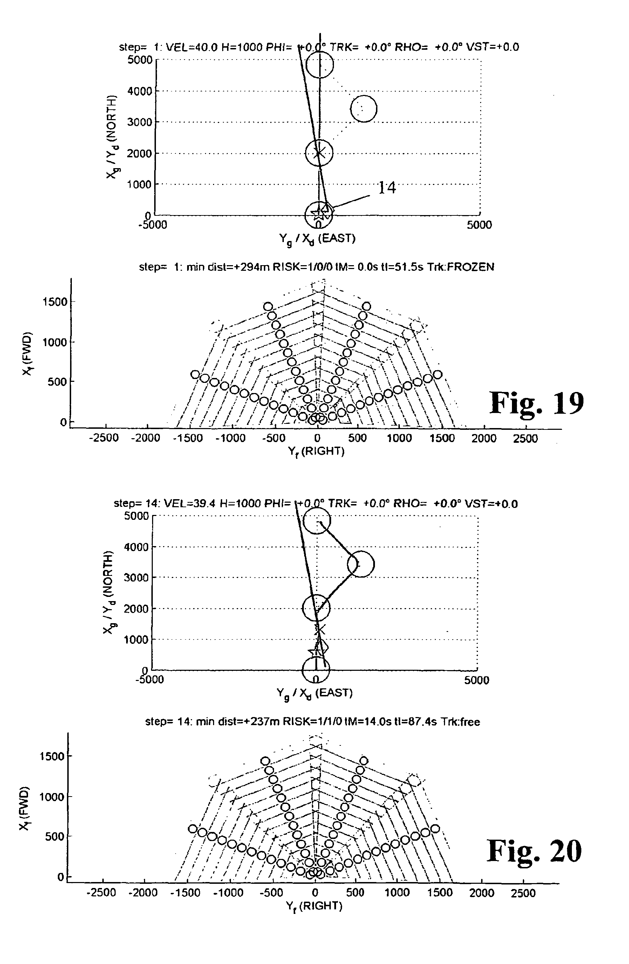

Im sechsten Szenario, das in der Figur 19 dargestellt ist, wird das Flugobjekt 8 von einem anderen Objekt 14 überholt. Es wird nur Regel 1 aktiviert und die Wegpunktweiterschaltung deaktiviert. Gleichzeitig wird die Fahrt verringert. Nach 14 Sekunden hat das Objekt 14 das Flugobjekt 8 soweit überholt, dass Regel 2 aktiviert wird. Hierdurch wird die Deaktivierung der Wegpunktweiterschaltung aufgehoben und ein Ausweichwegpunkt eingefügt, wie in Figur 20 zu erkennen ist. Dadurch setzt sich das Flugobjekt 8 rechts hinter das Objekt 14.

Die in den Ausführungsbeispielen genannten Zahlenwerte sind rein exemplarisch und können beliebig gewählt werden. Insbesondere eine Anpassung an die Fähigkeiten des Flugobjekts 8 ist sinnvoll.

## Patentansprüche

1. Verfahren zur Verarbeitung von Kollisionsinformationen in einem Flugobjekt (8), aufweisend die Verfahrensschritte Erfassen von sektorisierten Radardaten zumindest in einem vorderen rechten Quadranten (Q2), wobei für ein in einem Sektor befindliches Objekt (9, 10, 11) zumindest der Abstand und die Annäherungsgeschwindigkeit ermittelt werden, und Abarbeiten einer ersten Regel, nach der eine Hinweisinformation ausgegeben wird, wenn sich ein Objekt (9, 10, 11) innerhalb eines ersten Entscheidungshorizonts befindet, sich das Objekt (9, 10, 11) dem Flugobjekt (8) nähert und sich das Objekt (9, 10, 11) im vorderen rechten Quadranten (Q2) befindet, wobei eine zweite Regel abgearbeitet wird, nach der sich ein zweiter Entscheidungshorizont zumindest aus der Annäherungsgeschwindigkeit und einer zweiten Entscheidungszeitspanne berechnet und bei Sollstandlinienregelung des Flugobjekts (8) ein Ausweichwegpunkt (W5, W6, W7, W8) gesetzt wird, wenn sich das Objekt (9, 10, 11) innerhalb des zweiten Entscheidungshorizonts befindet, sich das Objekt (9, 10, 11) nähert und sich das Objekt (9, 10, 11) in einem linken Teilbereich (Q21) des rechten vorderen Quadranten (Q2) befindet.

2. Verfahren nach Anspruch 1, **gekennzeichnet durch** die Berechnung einer Kollisionszeit als Quotient des Abstands geteilt **durch** die Annäherungsgeschwindigkeit, wenn die Bedingungen der ersten Regel erfüllt sind.

3. Verfahren nach Anspruch 1 oder 2, **dadurch gekennzeichnet, dass** eine Wegpunktweiterschaltung deaktiviert wird, wenn die Bedingungen der ersten Regel erfüllt sind und die Flugbahn des Flugobjekts (8) anhand einer Sollstandlinienregelung bestimmt wird.

4. Verfahren nach einem der Ansprüche 1 bis 3, **dadurch gekennzeichnet, dass** der erste Entscheidungshorizont zumindest aus dem Produkt aus einer ersten Entscheidungszeitspanne und der Annäherungsgeschwindigkeit berechnet wird.

5. Verfahren nach einem der Ansprüche 1 bis 4, **dadurch gekennzeichnet, dass** eine Kollisionszeit als Quotient des Abstands geteilt durch die Annäherungsgeschwindigkeit berechnet wird und der Ausweichwegpunkt (W5, W6, W7, W8) in einem Abstand, der dem Produkt der Geschwindigkeit des Flugobjekts (8) mit der Kollisionszeit entspricht, und in einem Winkel, der sich aus der halben Breite des linken Teilbereichs multipliziert mit der Entscheidungszeitspanne geteilt durch die zweite Kollisionszeit berechnet, rechts von der Flugrichtung des Flugobjekts (8) gesetzt wird.

6. Verfahren nach Anspruch 5, **dadurch gekennzeichnet, dass** der Winkel auf 90 Grad beschränkt ist.

7. Verfahren nach einem der Ansprüche 1 bis 6, **dadurch gekennzeichnet, dass** die Geschwindigkeit des Flugobjekts (8) reduziert wird, wenn die Bedingungen der zweiten Regel erfüllt sind und die Geschwindigkeit des Flugobjekts (8) nach der Reduzierung größer ist als eine Mindestgeschwindigkeit.

8. Verfahren nach einem der Ansprüche 1 bis 7, **gekennzeichnet durch** die Abarbeitung einer dritten Regel, nach der ein Sinkflug oder Steigflug des Flugobjekts (8) eingeleitet wird, wenn sich ein Objekt (9, 10, 11) nähert und sich das Objekt (9, 10, 11) innerhalb eines dritten Entscheidungshorizonts befindet.

9. Verfahren nach Anspruch 8, **dadurch gekennzeichnet, dass** sich der dritte Entscheidungshorizont zumindest aus der Annäherungsgeschwindigkeit und einer dritten Entscheidungszeitspanne berechnet.

10. Verfahren nach Anspruch 9, **dadurch gekennzeichnet, dass** eine Kollisionszeit als Quotient des Abstands geteilt durch die Annäherungsgeschwindigkeit berechnet wird und bei Sollstandlinienregelung des Flugobjekts (8) ein Ausweichwegpunkt (W9) gesetzt wird, wenn sich das Objekt (9, 10, 11) im rechten Teilbereich des rechten vorderen Quadranten (Q2) befindet und die Bedingungen der dritten Regel erfüllt sind, wobei der Ausweichwegpunkt (W9) in einem Abstand, der dem Produkt der Geschwindigkeit des Flugobjekts (8) mit der Kollisionszeit entspricht, und in einem Winkel, der sich aus der Breite des rechten Teilbereichs multipliziert mit der Entscheidungszeitspanne geteilt durch die Kollisionszeit berechnet, links von der Flugrichtung des Flugobjekts (8) gesetzt wird.

11. Verfahren nach einem der Ansprüche 1 bis 7 oder 1,0, **dadurch gekennzeichnet, dass** ein bestehender Ausweichwegpunkt (W5, W6, W7, W8, W9) gelöscht wird, wenn ein neuer Ausweichwegpunkt (W5, W6, W7, W8, W9) gesetzt wird.

12. Verfahren nach einem der Ansprüche 1 bis 11, **dadurch gekennzeichnet, dass** ein einer Regel zugeordneter Risikoobjektzähler inkrementiert wird, wenn ein Objekt (9, 10, 11) die Bedingungen dieser Regel neu erfüllt.

13. Vorrichtung (1) zur Verarbeitung von Kollisionsinformationen in einem Flugobjekt (8), aufweisend mindestens zwei Sektorradare (2, 3, 4, 5), die jeweils einen vertikalen und horizontalen Erfassungsbereich aufweisen und deren kumulativer Erfassungsbereich zumindest einen vorderen rechten Quadranten (Q2) abdeckt und die für ein in einem Sektor befindliches Objekt (9, 10, 11) zumindest den Abstand und die Annäherungsgeschwindigkeit ermitteln, und eine Recheneinheit (6), die dazu ausgebildet ist, das Verfahren nach einem der Ansprüche 1 bis 12 durchzuführen.

## Claims

1. Method for processing collision information in a flying object (8), having the method steps acquiring sector-based radar data, at least in a front right quadrant (Q2), at least the distance and the speed of approach being determined for an object (9, 10, 11) located in a sector, and processing a first rule, according to which an item of advisory information is output if an object (9, 10, 11) is located within a first decision horizon, the object (9, 10, 11) is approaching the flying object (8) and the object (9, 10, 11) is located in the front right quadrant (Q2), a second rule being processed, according to which a second decision horizon is calculated at least from the speed of approach and a second decision time interval is calculated and, in the case of intended position line control of the flying object (8), a diversionary waypoint (W5, W6, W7, W8) is set if the object (9, 10, 11) is located within the second decision horizon, the object (9, 10, 11) is approaching and the object (9, 10, 11) is located in a left-hand sub-region (Q21) of the front right quadrant (Q2).

2. Method according to Claim 1, **characterized by** the calculation of a collision time as the ratio of the distance divided by the speed of approach if the conditions of the first rule are satisfied.

3. Method according to Claim 1 or 2, **characterized in that** waypoint relaying is deactivated if the conditions of the first rule are satisfied and the flight path of the flying object (8) is determined by using intended position line control.

4. Method according to one of Claims 1 to 3, **characterized in that** the first decision horizon is calculated at least from the product of a first decision time interval and the speed of approach.

5. Method according to one of Claims 1 to 4, **characterized in that** a collision time is calculated as the ratio of the distance divided by the speed of approach, and the diversionary waypoint (W5, W6, W7, W8) is set at a distance which corresponds to the product of the speed of the flying object (8) by the collision time, and at an angle on the right of the direction of flight of the flying object (8) which is calculated from half the width of the left-hand sub-region multiplied by the decision time interval and divided by the second collision time.

6. Method according to Claim 5, **characterized in that** the angle is restricted to 90 degrees.

7. Method according to one of Claims 1 to 6, **characterized in that** the speed of the flying object (8) is reduced if the conditions of the second rule are satisfied and the speed of the flying object (8) following the reduction is greater than a minimum speed.

8. Method according to one of Claims 1 to 7, **characterized by** the processing of a third rule, according to which a descending flight or ascending flight of the flying object (8) is initiated if an object (9, 10, 11) is approaching and the object (9, 10, 11) is located within a third decision horizon.

9. Method according to Claim 8, **characterized in that** the third decision horizon is calculated at least from the speed of approach and a third decision time interval.

10. Method according to Claim 9, **characterized in that** a collision time is calculated as the ratio of the distance divided by the speed of approach and, in the case of intended position line control of the flying object (8), a diversionary waypoint (W9) is set if the object (9, 10, 11) is located in the right-hand sub-region of the front right quadrant (Q2) and the conditions of the third rule are satisfied, the diversionary waypoint (W9) being set at a distance which corresponds to the product of the speed of the flying object (8) by the collision time, and at an angle on the left of the direction of flight of the flying object (8) which is calculated from the width of the right-hand sub-region multiplied by the decision time interval and divided by the collision time.

11. Method according to one of Claims 1 to 7 or 10, **characterized in that** an existing diversionary waypoint (W5, W6, W7, W8, W9) is deleted if a new diversionary waypoint (W5, W6, W7, W8, W9) is set.

12. Method according to one of Claims 1 to 11, **characterized in that** a risk object counter assigned to a rule is implemented if the object (9, 10, 11) again satisfies the conditions of this rule.

13. Apparatus (1) for processing collision information in a flying object (8), having at least two sector radars (2, 3, 4, 5) which each have a vertical and horizontal detection area and of which the cumulative detection area covers at least a front right quadrant (Q2), and which determine at least the distance and the speed of approach for an object (9, 10, 11) located in a sector, and a computing unit (6), which is designed to carry out the method according to one of Claims 1 to 12.

## Revendications

1. Procédé de traitement d'informations de collision dans un objet volant (8), comprenant les étapes suivantes : détection de données de radar sectorisées au moins dans un quadrant avant droit (Q2), au moins la distance et la vitesse d'approche étant déterminées pour un objet (9, 10, 11) qui se trouve dans un secteur, et application d'une première règle selon laquelle une information de notification est émise lorsqu'un objet (9, 10, 11) se trouve à l'intérieur d'un premier horizon de décision, l'objet (9, 10, 11) se rapproche de l'objet volant (8) et l'objet (9, 10, 11) se trouve dans le quadrant avant droit (Q2), une deuxième règle étant appliquée, selon laquelle un deuxième horizon de décision est calculé au moins à partir de la vitesse d'approche et d'un deuxième intervalle de temps de décision et un point de ligne de déroutement (W5, W6, W7, W8) est défini lors de la régulation de la ligne de consigne de l'objet volant (8) lorsque l'objet (9, 10, 11) se trouve à l'intérieur du deuxième horizon de décision, l'objet (9, 10, 11) se rapproche et l'objet (9, 10, 11) se trouve dans une zone partielle de gauche (Q21) du quadrant avant droit (Q2).

2. Procédé selon la revendication 1, **caractérisé par** le calcul d'un temps avant collision en tant que quotient de la distance divisée par la vitesse d'approche lorsque les conditions de la première règle sont remplies.

3. Procédé selon la revendication 1 ou 2, **caractérisé en ce qu'**un transfert de point de cheminement est désactivé lorsque les conditions de la première règle sont remplies et la trajectoire de vol de l'objet volant (8) est déterminée à l'aide d'une régulation de la ligne de consigne.

4. Procédé selon l'une des revendications 1 à 3, **caractérisé en ce que** le premier horizon de décision est calculé au moins à partir du produit d'un premier intervalle de temps de décision et de la vitesse d'approche.

5. Procédé selon l'une des revendications 1 à 4, **caractérisé en ce qu'**un temps avant collision est calculé en tant que quotient de la distance divisée par la vitesse d'approche et le point de ligne de déroutement (W5, W6, W7, W8) est défini à droite de la direction de vol de l'objet volant (8), à une distance qui correspond au produit de la vitesse de l'objet volant (8) par le temps avant collision et dans un angle qui est calculé à partir de la moitié de la largeur de la zone partielle de gauche multipliée par l'intervalle de temps de décision, divisé par le deuxième temps avant collision.

6. Procédé selon la revendication 5, **caractérisé en ce que** l'angle est limité à 90 degrés.

7. Procédé selon l'une des revendications 1 à 6, **caractérisé en ce que** la vitesse de l'objet volant (8) est réduite lorsque les conditions de la deuxième règle sont remplies et la vitesse de l'objet volant (8), après la réduction, est supérieure à une vitesse minimale.

8. Procédé selon l'une des revendications 1 à 7, **caractérisé par** l'application d'une troisième règle selon laquelle un vol en plongée ou un vol ascendant de l'objet volant (8) est initié lorsqu'un objet (9, 10, 11) se rapproche et que l'objet (9, 10, 11) se trouve à l'intérieur d'un troisième horizon de décision.

9. Procédé selon la revendication 8, **caractérisé en ce que** le troisième horizon de décision est calculé au moins à partir de la vitesse d'approche et d'un troisième intervalle de temps de décision.

10. Procédé selon la revendication 9, **caractérisé en ce qu'**un temps avant collision est calculé en tant que quotient de la distance divisée par la vitesse d'approche et lors de la régulation de la ligne de consigne de l'objet volant (8), un point de ligne de déroutement (W9) est défini lorsque l'objet (9, 10, 11) se trouve dans la zone partielle de droite du quadrant avant droit (Q2) et que les conditions de la troisième règle sont remplies, le point de ligne de déroutement (W9) étant défini à gauche de la direction de vol de l'objet volant (8) à une distance qui correspond au produit de la vitesse de l'objet volant (8) par le temps avant collision, et dans un angle qui est calculé à partir de la largeur de la zone partielle de droite multipliée par l'intervalle de temps de décision, divisé par le temps avant collision.

11. Procédé selon l'une des revendications 1 à 7 ou 10, **caractérisé en ce qu'**un point de ligne de déroutement (W5, W6, W7, W8, W9) existant est effacé lorsqu'un nouveau point de ligne de déroutement (W5, W6, W7, W8, W9) est défini.

12. Procédé selon l'une des revendications 1 à 11, **caractérisé en ce qu'**un compteur d'objets à risque associé à une règle est incrémenté lorsqu'un objet (9, 10, 11) remplit de nouveau les conditions de cette règle.

13. Dispositif (1) de traitement d'informations de collision dans un objet volant (8), possédant au moins deux radars sectorisés (2, 3, 4, 5) qui présentent respectivement une zone de détection verticale et horizontale et dont la zone de détection cumulée couvre au moins un quadrant avant droit (Q2), et qui déterminent au moins la distance et la vitesse d'approche pour un objet (9, 10, 11) qui se trouve dans un secteur, et une unité de calcul (6) qui est configurée pour mettre en oeuvre le procédé selon l'une des revendications 1 à 12.
